(19) **Europäisches Patentamt European Patent Office Office européen des brevets**

(11) **EP 2 767 817 B1**

(12) **EUROPEAN PATENT SPECIFICATION**

(45) Date of publication and mention
of the grant of the patent:
**31.01.2018 Bulletin 2018/05**

(51) Int Cl.:
*G01M 13/02* (2006.01)    *F16H 57/00* (2012.01)
*F16D 66/00* (2006.01)    *G05B 23/02* (2006.01)
*G07C 5/00* (2006.01)

(21) Application number: **13155617.7**

(22) Date of filing: **18.02.2013**

(54) **Method and device and computer program and computer readable means for monitoring the wear of the clutch of a manual or of an automated manual transmission , in particular for heavy vehicles**

Verfahren, Vorrichtung, Rechnerprogram und computerlesbares Aufzeichnungsmedium zur Überwachung des Verschleißes der Kupplung eines manuellen oder eines automatischen manuellen Getriebes, insbesondere für Schwerfahrzeuge

Méthode, dispositif, programme d'ordinateur et support de stockage lisible par ordinateur de surveillance de l'usure de l'embrayage d'un manuel ou d'une transmission manuelle automatisée, en particulier pour véhicules lourds

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.08.2014 Bulletin 2014/34**

(73) Proprietor: **IVECO S.p.A.**
**10156 Torino (IT)**

(72) Inventors:
• **Labella, Saverio**
**10034 Chivasso (IT)**
• **Lomaestro, Massimo**
**10045 Piossasco (IT)**
• **Varalda, Orlando**
**10088 Volpiano (IT)**

(74) Representative: **Franzolin, Luigi et al**
**Studio Torta S.p.A.**
**Via Viotti, 9**
**10121 Torino (IT)**

(56) References cited:
WO-A2-2004/078543    WO-A2-2009/133161
DE-A1- 19 609 106    JP-A- H08 303 485
JP-A- 2004 125 001    JP-A- 2004 293 629
JP-A- 2010 065 795

**Description**

**Application field of the invention**

The present invention refers to the field of vehicle diagnostic systems and more precisely to the wear of the clutch, in particular for heavy vehicles.

US5723779 shows a system for determining a residual life of a friction clutch is constructed so that the loaded condition of the clutch is determined in accordance with detected differential revolution, control oil pressure, oil temperature, and loading time, with which the residual life of the friction clutch is calculated. JP2010 065795 is considered as the closest prior art.

Description of the prior art

A clutch is interposed between the engine and the transmission.

In heavy vehicles, due to the remarkable masses at stake, the clutch may be subject to a very high stress. In addition, the gearbox ratio has to be defined in relation to the type of mission in which the vehicle is intended to be used, in order to avoid the clutch to be subject to failures or to an early wear.

For example, a vehicle intended to be used for garbage collection is subject to frequent subsequent stops, travelling at very low speed.

In other cases, when there is a manual transmission, the driving style of a driver of a heavy vehicle may overstress the clutch, for example by continuous hard accelerations with a high gearbox ratio, or by fully laden/hill starts with a high gear, instead of the first gear.

At present it is not possible to appropriately estimate the remaining life of the clutch or to identify a wrong gearbox ratio or a wrong use of the vehicle by the driver, when there is a manual transmission.

This has a negative impact on the warranty costs to be met by the manufacturer.

Summary of the invention

Therefore the aim of the present invention is to provide a system for monitoring the wear of the clutch of a manual or of an automated manual transmission, for identifying a wrong mission assigned to the gearbox and for estimating the remaining life of the clutch.

The object of the present invention is a system for monitoring the wear of the clutch of a manual or of an automated manual transmission, in accordance with claim 1. The claims are an integral part of the present description.

Brief description of the Figures

Further purposes and advantages of the present invention will become clear from the following detailed description of a preferred embodiment (and of its alternative embodiments) and the drawings that are attached hereto, which are merely illustrative and non-limitative, in which:

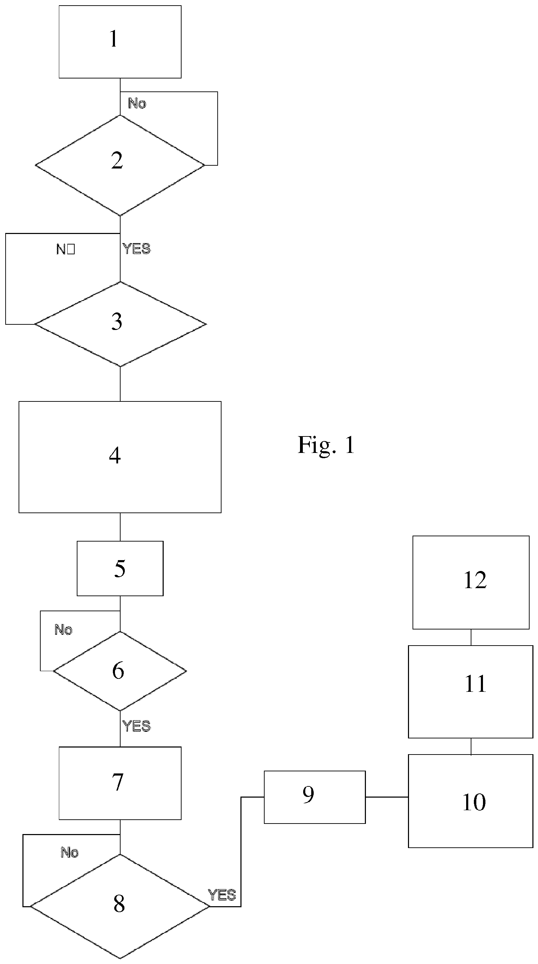

figure 1 shows an example of block diagram to realize at least a part of the present method.

In the figures the same reference numbers and letters identify the same elements or components.

Detailed description of preferred embodiments of the invention

The description that follows refers to the method that is object of the invention, which allows to monitor in a continuous way the wear of the clutch of a manual or of an automated manual transmission.

According to a first aspect of the present invention, it is necessary to detect a quantity that is proportional to the wear of the clutch.

Either when the clutch is manual or when it is automated manual, springs are provided for packing clutch disks.

According to the present invention, both the clutch slip time interval T1 due to a packing of the disks because of the action of the springs, for example when the clutch pedal is gradually released, and the clutch slip time interval T2 occurring after the packing, namely when no force opposes the packing actions of the aforementioned springs, are monitored. For more convenience, "automatic packing means" will hereinafter refer generically to said springs or to electric or hydraulic or pneumatic actuators provided to realize said clutch packing.

T1 and T2 identify time intervals, each one of them having a start and an end.

Such monitoring makes sense until a gear is engaged, provoking a transfer of driving torque from the engine to the driveline.

According to the present invention, the start instant T1 is identified when, with the pedal not fully released and the driving torque provided by the engine being higher than the idle torque, any variation of the vehicle speed is detected. The end instant T1, on the contrary, is identified when the clutch pedal is fully released. The end time of T1 coincides with the start time of T2, thus the two intervals are contiguous.

It is worth noting that, thanks to the present method, it is sufficient to associate a simple ON/OFF sensor to the clutch pedal, which is able to detect only the full release of the pedal.

If the gear engaged is unknown, the end instant of T2 is identified when k, the ratio between vehicle speed and engine revolutions per minute, is constant.

On the contrary, if it is possible to know for certain which gear is engaged, for example because a control unit controls an automated manual transmission, or because one or more sensors are associated to the gear shift, then the end instant T2 may be identified when such value k reaches a predetermined value $K_C$ which takes into account the gearbox ratio of the whole drive line, including the correctly engaged gear.

In the following T will refer to the sum of the time intervals T1 and T2.

During T, the variation of the engine revolutions per minute is monitored, and, at the same time, also the variation of the vehicle speed is monitored, in order to identify the overall slip Drpm of the clutch. That is a difference of revolutions per minute between at least a driven disk and at least a driving disk of the clutch. In other words, it is a matter of calculating the number of times the driven disk does not keep the pace with respect to the driving disk.

At the same time, the torque C delivered by the engine is monitored, in order to calculate the energy E dissipated on the clutch as an integral in T of the torque delivered for the slip Drpm:

$$E = \int_T C(t)\Delta_{rpm}(t)dt \qquad \text{(i)}$$

where dt is the differential of time.

According to a first aspect of the present invention, the total energy Etot dissipated on the clutch is calculated at each packing of the respective disks, in order to estimate a remaining life of the clutch itself.

According to a further aspect of the present invention, a moving average Em is calculated on the last n1 calculated energy values E.

When a further calculated energy exceeds said average Em, for example a predetermined threshold, then an anomaly of use of the vehicle is registered.

Similarly, a moving average Tm is calculated on the last n2 determined values of T2.

According to a further aspect of the present invention, said remaining life of the clutch can be estimated also or only on the basis of the increase of said interval of time T2. Such estimation, anyway, does not take into account the conditions of use of the vehicle that are highly influenced by the carried load and by the positive slope of the road where the vehicle travels.

According to another aspect of the invention, the resisting torque Cr is estimated with respect to the clutch, by means of a load index L.

In particular, immediately after the end of T, the delivered driving torque and the acceleration of the vehicle are monitored. This can be made in the shortest possible time interval, in order to identify such acceleration value by limiting the influence of the variation in the slope of the road.

The delivered torque C, divided by said acceleration, identifies a value that is proportional to a virtual load index L the clutch has to bear. If such load value is higher than a predetermined reference value Lmax and a lower gearbox ratio is available, it means that the driver started with the wrong gear or shifted too early or downshifted without being allowed to do so, putting the clutch under stress. Thus an anomaly of use of the vehicle is registered together with date and time and, if available, the terrestrial coordinates of vehicle's position.

Lmax can be defined a priori in relation to an estimation of vehicle's mass and of the gearbox ratio.

If, on the contrary, Lmax is exceeded very often, for example in terms of percentage of the number of packings, namely on the number of shifting/starting, it means that the gearbox ratio is wrong. In other words, such gearbox is not suitable for the mission of the vehicle.

In addition, by the ratio between such slip time interval T2 and the virtual load L, the objective magnitude T2' is identified, which does not depend on the weight of the vehicle or on the slope of the road. In this case, an extension of T2' with respect to previous samples or to moving averages Tm' calculated on previous samples, clearly identifies a decay of the clutch.

The monitoring of such decay can be useful to calculate the remaining life of the clutch and to suggest the replacement of the latter during the routine maintenance of the vehicle, in order to avoid stopping the vehicle for a subsequent replacement of the clutch.

A preferred alternative embodiment of the method comprises the following steps performed in a sequence and in continuous cycles:

- (step 1) acquisition of signals such as vehicle speed V, torque C delivered by the engine, engine rpm, condition of full release of the clutch and optionally engaged gear,
- (step 2) waiting/delay until the clutch pedal is pressed, when the clutch pedal is pressed
- (step 3) waiting/delay until the torque (C) delivered by the engine is higher than the idle torque (C_idle), when the delivered torque is higher than the idle torque,
- (step 4) storage of delivered torque (C), of engine rpm (rpm) and of vehicle speed (V) and reset of the counters T1 and T2;
- (step 5) start T1,
- (step 6) waiting/delay until the clutch pedal is fully released, when it is fully released,
- (step 7) stop T1 and start T2
- (step 8) waiting/delay until the ratio k = V/rpm is constant, when such ratio is constant,
- (step 9) stop T2,
- (step 10) calculation of the energy dissipated on the clutch according to the formula (i),
- (step 11) calculation of the total energy (Etot) dissipated overall on the clutch and estimation of a remaining life of the clutch,
- (step 12) if a remaining mileage corresponding to said remaining life is lower than the mileage corresponding to next second servicing coupon, storage of a warning message to replace the clutch during next servicing coupon.

The present invention can be at least partially realized by means of a vehicular control unit. Possibly, the present invention can be realized by means of the cooperation of a vehicular control unit and a diagnostic tool that can be connected, or remotely connected, to the vehicular control unit.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

From the description set forth above it will be possible for the person skilled in the art to embody the invention with no need of describing further construction details. The elements and the characteristics described in the different preferred embodiments may be combined without departing from the scope of the present application.

**Claims**

1. Method for monitoring the wear of the clutch of a manual or automated manual transmission, in particular for industrial vehicles, wherein the following steps are performed for any packing of the disks:

   - estimation of an overall clutch slip time interval (T),
   - calculation of an overall slip (Drpm) sustained by the clutch during said overall time interval (T),
   - storage of torque values (C) delivered by a vehicle engine during said overall time interval (T),
   - calculation of an energy (E) dissipated on the clutch as an integral (i) in said overall time (T) of the delivered torque (C) multiplied by said overall slip (Drpm).

2. Method according to claim 1, wherein said overall time interval (T) comprises a first clutch slip time interval (T1) during a packing operation of the clutch disks, due to the action of the respective packing means.

3. Method according to claim 2, wherein a start instant of said first slip time interval (T1) is identified when

   - with the pedal not fully released

        . the driving torque provided by the engine is higher than a respective idle torque and
        . the vehicle speed varies.

4. Method according to one of the claims 2 or 3, wherein an end instant of said first slip time interval (T1) is identified by a full packing of the clutch disks.

5. Method according to claim 4, wherein said full packing is identified by a full release of the clutch pedal.

6. Method according to one of the claims from 2 to 5, wherein said overall time interval (T) comprises a second clutch slip time interval (T2) that is contiguous and subsequent to said first time interval (T1).

7. Method according to claim 6, wherein an end instant of said second time interval (T2) is identified by means of a stabilization instant of a value (k) of a ratio between the vehicle speed and the engine revolutions per minute.

8. Method according to claim 6, wherein an end instant of said second slip time interval (T2) is identified by means of the following steps:

   - acquisition of the correctly engaged gear,
   - calculation of a full gear ratio ($K_C$) of the vehicle driveline,
   - calculation of a value (k) of a ratio between vehicle speed and engine revolutions per minute,

   said end instant of said second interval of time (T2) is identified when said value (k) tends to said full gear ratio ($K_C$).

9. Method according to any one of the claims from 1 to 8, wherein a remaining life of the clutch is calculated according to an overall energy (Etot) dissipated on the clutch.

10. Method according to any one of the previous claims, further comprising

   - a step of calculating a moving average (Em) on the last *n* calculated energy values (E) dissipated on the clutch and
   - a step of storing an anomaly when a further energy value (E) dissipated on the clutch is higher than said moving average, exceeding a predetermined threshold.

11. Method according to any one of the preceding claims, further comprising the step of estimating a resisting torque (Cr) with respect to the clutch, by means of a load index (L).

12. Method according to claim 11, wherein said load index (L) is calculated

   - acquiring an acceleration value of the vehicle after said overall clutch slip time interval (T),
   - acquiring a driving torque value (C) delivered by the engine,
   - dividing such driving torque value (C) by said acceleration value.

13. Method according to claim 12, wherein when said load index value (L) is higher than a predefined reference value (Lmax) and a lower gear of the gearbox is available, then an anomaly of use of the clutch is stored.

14. Method according to claim 13, wherein when said anomalies are a relevant percentage with respect to a respective number of clutch packings, a message of wrong gear of the gearbox is stored.

15. Method according to claim 13, further comprising the following steps:

   - calculation of a further parameter (T2') given from the division of said second clutch slip time interval (T2) by said load index (L),
   - identification of a clutch decay when said further parameter (T2') increases abruptly with respect to one or more respective values previously calculated or with respect to a respective moving average (Tm').

16. Device for monitoring the wear of the clutch of a manual or automated manual transmission, in particular for industrial vehicles, comprising means for estimating an overall clutch slip time interval (T) for each packing of the clutch disks, first means for calculating an overall slip (Drpm) sustained by the clutch during said overall time interval (T), means for storing values of torque (C) delivered by a vehicle engine during said overall time interval (T), second means of calculating an energy (E) dissipated on the clutch as an integral (i) in said overall time (T) of the delivered torque (C) multiplied by said overall slip (Drpm).

17. Computer program comprising program code means suitable for performing all the steps of any claim from 1 to 15, when such program is run on a computer.

18. Computer-readable means comprising a recorded program, said computer-readable means comprising program code means suitable for performing all the steps according to claims from 1 to 15, when said program is run on a computer.

19. Ground vehicle comprising a device for monitoring the wear of the clutch of a manual or of an automated manual transmission, in accordance with claim 16.

**Patentansprüche**

1. Verfahren zur Überwachung des Verschleißes eines manuellen oder automatischen manuellen Getriebes, insbesondere für Nutzfahrzeuge, bei welchem die folgenden Schritte für jeden Greifzustand der Scheiben durchgeführt werden:

   - Schätzung eines gesamten Kupplungsschlupf-Zeitintervalls (T),
   - Berechnung eines Gesamtschlupfes (Drpm), welchem die Kupplung während des gesamten Zeitintervalls (T) unterliegt,
   - Speicherung von Drehmomentwerten (C), welche von einem Fahrzeugmotor während des gesamten Zeitintervalls (T) ausgegeben werden,
   - Berechnung einer Energie (E), die von der Kupplung abgegeben wird, als ein Integral (i) über die Gesamtzeit (T) des abgegebenen Drehmoments (C), multipliziert mit dem Gesamtschlupf (Drpm).

2. Verfahren gemäß Anspruch 1, bei welchem das gesamte Zeitintervall (T) ein erstes Kupplungsschlupf-Zeitintervall (T1) während eines Greifzustands der Kupplungsscheiben umfasst, aufgrund der Wirkung der jeweiligen Greifmittel.

3. Verfahren gemäß Anspruch 2, bei welchem ein Startmoment des ersten Schlupf-Zeitintervalls (T1) identifiziert wird, wenn

   - bei nicht voll gelöstem Pedal

     • das Antriebsdrehmoment, das von dem Motor ausgegeben wird, höher ist als ein entsprechendes Leerlaufdrehmoment, und
     • die Fahrzeuggeschwindigkeit variiert.

4. Verfahren gemäß einem der Ansprüche 2 oder 3, bei welchem ein Endmoment des ersten Schlupf-Zeitintervalls (T1) bei vollem Greifen der Kupplungsscheiben identifiziert wird.

5. Verfahren gemäß Anspruch 4, bei welchem das volle Greifen als vollständiges Lösen der Kupplungspedale identifiziert wird.

6. Verfahren gemäß einem der Ansprüche 2 bis 5, bei welchem das gesamte Zeitintervall (T) ein zweites Kupplungsschlupf-Zeitintervall (T2) umfasst, welches sich an das erste Zeitintervall (T1) anschließt und diesem nachfolgt.

7. Verfahren gemäß Anspruch 6, bei welchem ein Endmoment des zweiten Zeitintervalls (T2) mittels eines Stabilisierungsmoments eines Wertes (k) eines Verhältnisses zwischen der Fahrzeuggeschwindigkeit und den Motorumdrehungen pro Minute identifiziert wird.

8. Verfahren gemäß Anspruch 6, bei welchem ein Endmoment des zweiten Schlupf-Zeitintervalls (T2) durch einen der folgenden Schritte identifiziert wird:

   - Ermittlung des korrekt eingelegten Ganges,
   - Berechnung eines vollen Übersetzungsverhältnisses (Kc) des Fahrzeugantriebsstrangs,
   - Berechnung eines Werts (k) eines Verhältnisses zwischen Fahrzeuggeschwindigkeit und Motorumdrehungen pro Minute,

wobei der Endmoment des zweiten Zeitintervalls (T2) identifiziert wird, wenn der Wert (k) sich dem vollen Übersetzungsverhältnis (Kc) nähert.

9. Verfahren gemäß einem der Ansprüche 1 bis 8, bei welchem eine Restlebensdauer der Kupplung berechnet wird entsprechend einer Gesamtenergie (Etot), die von der Kupplung abgegeben wird.

10. Verfahren gemäß einem der vorhergehenden Ansprüche, ferner umfassend:

    - einen Schritt der Berechnung eines gleitenden Mittelwerts (Em) der letzten *n* berechneten Energiewerte (E), die von der Kupplung abgegeben werden, und
    - einen Schritt der Speicherung einer Anomalie, wenn ein weiterer Energiewert (E) von der Kupplung abgegeben wird, höher als der gleitende Mittelwert und eine vorbestimmte Schwelle überschreitet.

11. Verfahren gemäß einem der vorhergehenden Ansprüche, ferner umfassend den Schritt der Schätzung eines Widerstandsdrehmoments (Cr) bezüglich der Kupplung mittels eines Lastindex (L).

12. Verfahren gemäß Anspruch 11, bei welchem der Lastindex (L) berechnet wird durch

    - Ermittlung eines Beschleunigungswerts des Fahrzeugs nach dem gesamten Kupplungsschlupf-Zeitintervall (T),
    - Ermittlung eines Antriebsdrehmoments (C), das von dem Motor abgegeben wird,
    - Teilen des Antriebsdrehmoments (C) durch den Beschleunigungswert.

13. Verfahren gemäß Anspruch 12, bei welchem dann, wenn der Lastindex (L) höher ist als ein vorbestimmter Referenzwert (Lmax) und ein niedrigerer Gang des Getriebes verfügbar ist, eine Anomalie der Benutzung der Kupplung gespeichert wird.

14. Verfahren gemäß Anspruch 13, bei welchem dann, wenn Anomalien ein relevanter Prozentsatz bezüglich einer entsprechenden Anzahl von Kupplungszugriffen ist, eine Nachricht eines Getriebefehlers des Getriebes gespeichert wird.

15. Verfahren gemäß Anspruch 13, ferner umfassend die folgenden Schritte:

    - Berechnung eines weiteren Parameters (T2'), als Ergebnis der Division des zweiten Kupplungsschlupf-Zeitintervalls (T2) durch den Lastindex (L),
    - Identifizierung einer Kupplungsabnutzung, wenn ein weiterer Parameter (T2') abrupt gegenüber einen oder mehreren entsprechenden Werten anwächst, die zuvor berechnet wurden, oder gegenüber einem entsprechenden gleitenden Mittelwert (Tm').

16. Vorrichtung zur Überwachung der Abnutzung der Kupplung eines manuellen oder automatischen manuellen Getriebes, insbesondere für Nutzfahrzeuge, umfassend Mittel zur Schätzung eines gesamten Kupplungsschlupf-Zeitintervalls (T) für jeden Zugriff der Kupplungsscheiben, erste Mittel zur Berechnung eines Gesamtschlupfes (Drpm), welchem die Kupplung unterliegt, während dieses Gesamtzeitintervalls (T), Mittel zur Speicherung von Drehmomentwerten (C), die von einem Fahrzeugmotor während des gesamten Zeitintervalls (D) ausgegeben werden, zweite Mittel zur Berechnung einer Energie (E), die von der Kupplung abgegeben wird, als ein Integral (i) über die Gesamtzeit (T) des abgegebenen Drehmoments (C), multipliziert mit dem Gesamtschlupf (Drpm).

17. Computerprogramm, umfassend Programmcodemittel, geeignet zur Durchführung aller Schritte von einem der Ansprüche 1 bis 15, wenn dieses Programm auf einem Computer ausgeführt wird.

18. Computerlesbare Mittel, umfassend ein aufgezeichnetes Programm, welche computerlesbaren Mittel Programmcodemittel umfassen, geeignet zur Durchführung aller Schritte von einem der Ansprüche 1 bis 15, wenn das Programm auf einem Computer ausgeführt wird.

19. Landfahrzeug, umfassend eine Vorrichtung zur Überwachung der Nutzung der Kupplung eines manuellen oder automatischen manuellen Betriebes gemäß Anspruch 16.

**EP 2 767 817 B1**

**Revendications**

1. Méthode de surveillance de l'usure de l'embrayage d'un manuel ou d'une transmission manuelle automatisée, en particulier pour des véhicules industriels, dans laquelle les étapes suivantes sont réalisées pour toute garniture des disques :

   - l'estimation d'un intervalle de temps global de patinage d'embrayage (T),
   - le calcul d'un patinage global (Drpm) soutenu par l'embrayage pendant ledit intervalle de temps global (T),
   - le stockage de valeurs de couple (C) délivrées par un moteur de véhicule pendant ledit intervalle de temps global (T),
   - le calcul d'une énergie (E) dissipée sur l'embrayage comme une intégrale (i) dans ledit temps global (T) du couple délivré (C) multiplié par ledit patinage global (Drpm).

2. Méthode selon la revendication 1, dans laquelle ledit intervalle de temps global (T) comprend un premier intervalle de temps de patinage d'embrayage (T1) pendant une opération de garniture des disques d'embrayage, en raison de l'action du moyen de garniture respectif.

3. Méthode selon la revendication 2, dans laquelle un instant de démarrage dudit premier intervalle de temps de patinage (T1) est identifié lorsque

   - avec la pédale pas totalement relâchée

      • le couple moteur fourni par le moteur est plus élevé qu'un couple au ralenti respectif et
      • la vitesse du véhicule varie.

4. Méthode selon l'une des revendications 2 ou 3, dans laquelle un instant final dudit premier intervalle de temps de patinage (T1) est identifié par une garniture totale des disques d'embrayage.

5. Méthode selon la revendication 4, dans laquelle ladite garniture totale est identifiée par un relâchement total de la pédale d'embrayage.

6. Méthode selon l'une des revendications 2 à 5, dans laquelle ledit intervalle de temps global (T) comprend un second intervalle de temps de patinage d'embrayage (T2) qui est contigu et ultérieur audit premier intervalle de temps (T1).

7. Méthode selon la revendication 6, dans laquelle un instant final dudit second intervalle de temps (T2) est identifié au moyen d'un instant de stabilisation d'une valeur (k) d'un rapport entre la vitesse de véhicule et les tours moteur par minute.

8. Méthode selon la revendication 6, dans laquelle un instant final dudit second intervalle de temps de patinage (T2) est identifié au moyen des étapes suivantes :

   - l'acquisition de la vitesse enclenchée correctement,
   - le calcul d'un rapport de vitesse total ($K_C$) de la ligne d'arbres de transmission du véhicule,
   - le calcul d'une valeur (k) d'un rapport entre une vitesse du véhicule et des tours moteur par minute, ledit instant final dudit second intervalle de temps (T2) est identifié lorsque ladite valeur (k) tend vers ledit rapport de vitesse total ($K_C$).

9. Méthode selon l'une quelconque des revendications 1 à 8, dans laquelle une durée de vie restante de l'embrayage est calculée selon une énergie globale (Etot) dissipée sur l'embrayage.

10. Méthode selon l'une quelconque des revendications précédentes, comprenant en outre

    - une étape de calcul d'une moyenne mobile (Em) sur les *n* dernières valeurs d'énergie calculées (E) dissipées sur l'embrayage et
    - une étape de stockage d'une anomalie lorsqu'une valeur d'énergie supplémentaire (E) dissipée sur l'embrayage est plus élevée que ladite moyenne mobile, dépassant un seuil prédéterminé.

11. Méthode selon l'une quelconque des revendications précédentes, comprenant en outre l'étape d'estimation d'un couple résistant (Cr) par rapport à l'embrayage, au moyen d'un indice de charge (L).

12. Méthode selon la revendication 11, dans laquelle ledit indice de charge (L) est calculé

- par l'acquisition d'une valeur d'accélération du véhicule après ledit intervalle de temps global de patinage d'embrayage (T),
- par l'acquisition d'une valeur de couple moteur (C) délivrée par le moteur,
- par la division de cette valeur de couple moteur (C) par ladite valeur d'accélération.

13. Méthode selon la revendication 12, dans laquelle, lorsque ladite valeur d'indice de charge (L) est plus élevée qu'une valeur de référence prédéfinie (Lmax) et qu'une vitesse inférieure de la boîte de vitesses est disponible, alors une anomalie d'utilisation de l'embrayage est stockée.

14. Méthode selon la revendication 13, dans laquelle, lorsque lesdites anomalies sont un pourcentage pertinent par rapport à un nombre respectif de garnitures d'embrayage, un message de mauvaise vitesse de la boîte de vitesses est stocké.

15. Méthode selon la revendication 13, comprenant en outre les étapes suivantes :

- le calcul d'un paramètre supplémentaire (T2') donné à partir de la division dudit second intervalle de temps de patinage d'embrayage (T2) par ledit indice de charge (L),
- l'identification d'un déclin d'embrayage lorsque ledit paramètre supplémentaire (T2') augmente brusquement par rapport à une ou plusieurs valeurs respectives calculées précédemment ou par rapport à une moyenne mobile (Tm') respective.

16. Dispositif de surveillance de l'usure de l'embrayage d'un manuel ou d'une transmission manuelle automatisée, en particulier pour des véhicules industriels, comprenant un moyen d'estimation d'un intervalle de temps global de patinage d'embrayage (T) pour chaque garniture des disques d'embrayage, un premier moyen de calcul d'un patinage global (Drpm) soutenu par l'embrayage pendant ledit intervalle de temps global (T), un moyen de stockage de valeurs de couple (C) délivrées par un moteur de véhicule pendant ledit intervalle de temps global (T), un second moyen de calcul d'une énergie (E) dissipée sur l'embrayage comme une intégrale (i) dans ledit temps global (T) du couple délivré (C) multiplié par ledit patinage global (Drpm).

17. Programme d'ordinateur comprenant des moyens de code de programme appropriés pour réaliser toutes les étapes de l'une quelconque des revendications 1 à 15, lorsque ce programme est exécuté sur un ordinateur.

18. Moyens lisibles par ordinateur comprenant un programme enregistré, lesdits moyens lisibles par ordinateur comprenant des moyens de code de programme appropriés pour réaliser toutes les étapes selon les revendications 1 à 15, lorsque ledit programme est exécuté sur un ordinateur.

19. Véhicule au sol comprenant un dispositif de surveillance de l'usure de l'embrayage d'une transmission manuelle ou manuelle automatisée, conformément à la revendication 16.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5723779 A

- JP 2010065795 A